# EUROPEAN PATENT SPECIFICATION

(11) **EP 4 492 768 B1**
(45) Date of publication and mention of the grant of the patent: **09.09.2026**
(21) Application number: 22933717.5
(22) Date of filing: 23.03.2022
(51) Int. Cl.: H04N 5/64, F16M 13/02, F16M 11/22

(54) **DISPLAY DEVICE**
ANZEIGEVORRICHTUNG
DISPOSITIF D'AFFICHAGE

(43) Date of publication of application: 15.01.2025
(73) Proprietor: LG Electronics Inc., Yeongdeungpo-gu Seoul 07336 (KR)
(72) Inventor: KIM, Hansoo, Seoul 06772 (KR); LEE, Choonhwa, Seoul 06772 (KR); HAN, Dongyoup, Seoul 06772 (KR); LEE, Jaejun, Seoul 06772 (KR); BAE, Joonsub, Seoul 06772 (KR); MOON, Hyunchul, Seoul 06772 (KR)
(74) Representative: Schornack, Oliver
(86) International application number: PCT/KR2022/004053
(87) International publication number: WO 2023/182544

(56) References cited:
- WO-A1-2017/098711
- JP-A- 2009 122 274
- JP-A- 2018 022 188
- KR-A- 20120 072 865
- KR-A- 20190 081 889
- KR-A- 20210 127 402
- US-A1- 2006 124 804
- US-A1- 2007 080 270
- US-A1- 2007 145 212
- US-A1- 2019 103 051

## Description

### [Technical Field]

The disclosure relates to a display device including a stand with a simple structure.

### [Background Art]

With growth of information society, demand for various display devices has increased. In order to satisfy such demand, in recent years, a liquid crystal display (LCD), a field emission display (FED), a plasma display panel (PDP), and an electroluminescent device have been developed as display devices.

A liquid crystal panel of the liquid crystal display includes a liquid crystal layer and a TFT substrate and a color filter substrate opposite each other in the state in which the liquid crystal layer is interposed therebetween, wherein a picture is displayed using light provided from a backlight unit.

An active matrix type organic light-emitting display has come onto the market as an example of the electroluminescent device. Since the organic light-emitting display is self-emissive, the organic light-emitting display has no backlight, compared to the liquid crystal display, and has merits in terms of response time and viewing angle, and therefore the organic light-emitting display has attracted attention as a next-generation display.

Display devices may be mounted in various manners. Placing a display device on a shelf or table or hanging it on a wall is common. However, a floor-standing type has become popular because it provides a picture frame-like appearance.

US 2007/145212 A1 relates to panel-type television employing a plasma display panel (PDP) module. A frame member is fixed to the PDP module so as to surround upper, lower, left and right sides of the PDP module. A left vertically extending reinforcement frame and a right vertically extending reinforcement frame are arranged at a back side of the PDP module. Right and left U-shaped guide members are mounted on inner surface regions of the reinforcement frames. The right guide member defines a mounting portion of the right stand and the left guide member defines a mounting portion of the left stand.

US 2006/124804 A1 discloses a display and a cable clip thereof. The display comprises a main body, a base, a support and a cable clip. The base supports the main body via the support connecting the main body and the base and comprising a depression with a lateral wall. The cable clip is disposed on the support and accommodated in the depression.

US 2007/080270 A1 relates to a stand for an image display device. The stand comprises a supporting member, a connecting member and a base member. The supporting member supports the image display device. the connecting member is coupled to the supporting member and rotatable in forward and backward directions with respect to the supporting member. The base member supports the image display device with respect to a floor. The base member is rotatable in the same direction as the rotation direction of the connecting member for being folded to a back of the image display device.

### [Disclosure]

### [Technical Problem]

The disclosure is intended to provide a display device including a stand with a simple structure.

### [Technical Solution]

This object is solved by the invention as defined in independent claim 1. Preferred embodiments are set out in the dependent claims.

A display device is provided including: a display body including a display module outputting an image; and a pair of stands supporting the display body and arranged spaced apart from each other in a horizontal direction. Each of the stands includes: a fastening portion fastened to a rear surface of the display body; a vertical portion extending downward from the fastening portion; and a support portion extending from the vertical portion in a front direction perpendicular to a surface direction of the display body.

The vertical portion may extend downward from a rear-direction end of the fastening portion, and the support portion may protrude forward from a front surface of the display body.

The support portion may include a plate-shaped member having a surface perpendicular to the horizontal direction and having a small thickness in the horizontal direction.

The vertical portion and the support portion may have the same thickness in the horizontal direction.

The fastening portion includes: a first sidewall; a second sidewall disposed spaced apart from the first sidewall; a third sidewall connecting front ends of the first sidewall and the second sidewall to each other; and a first screw penetrating the third sidewall and fastened to the display body. The first sidewall may form a continuous surface with the vertical portion.

The display device further includes a holder block inserted between the first sidewall and the second sidewall.

The first sidewall and the second sidewall further includes a guide groove and a fixing groove, and the holder block includes a guide protrusion inserted into the guide groove and a fixing protrusion inserted into the fixing groove to fix the holder block.

The display device may further include a bottom portion connecting bottoms of the first sidewall and the second sidewall to each other, and the bottom portion may be spaced apart from the holder block by a predetermined distance.

The display device may further include a stand support fastened to the rear surface of the display body, and the stand may be fastened to the stand support.

The stand support may include a hook fastened to a cover bottom located on the rear surface of the display body, and a second screw penetrating the stand support and fixed to the cover bottom.

The display body may include: a cover bottom coupled to a rear surface of the display module; a printed circuit board mounted on the cover bottom; a cable connected to the printed circuit board; a back cover including an opening through which the cable passes and covering the printed circuit board; and a cable clip coupled to the back cover and fixing the cable.

The cable clip may be located between the opening of the back cover and the stand.

### [Advantageous Effects]

A display device of the disclosure may implement a floating design on its front by using a stand with a simple design.

Further, the structure of the stand is simple, thereby making a manufacturing process simple and assembly easy.

Further, as a cable extends along the stand, the messy appearance of the cable may be hidden from the front.

Effects obtainable from the disclosure may not be limited to the above-mentioned effects, and other unmentioned effects may be clearly understood from the following description by those skilled in the technical field to which the disclosure pertains.

### [Description of Drawings]

FIG. 1 is a block diagram illustrating components of a display device according to the disclosure.
FIG. 2 is a perspective view illustrating an exemplary display device according to the disclosure.
FIG. 3 is a front view and side view illustrating an exemplary display device according to the disclosure.
FIG. 4 is a rear perspective view illustrating an exemplary display device according to the disclosure.
FIG. 5 is an exploded perspective view illustrating an exemplary display device according to the disclosure.
FIG. 6 is a cross-sectional view taken along line A-A of FIG. 4.
FIG. 7 is a diagram illustrating a method of organizing a cable in a display device according to the disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Meanwhile, an image display device described in this specification is, for example, an intelligent image display device having a computer supporting function in addition to a broadcast reception function, wherein an Internet function may be added while the broadcast reception function is devotedly performed, whereby an interface that is more conveniently used, such as a handwriting type input device, a touchscreen, or a space remote control, may be provided. In addition, the image display device may be connected to the Internet or a computer through support of a wired or wireless Internet function, whereby various functions, such as e-mail, web browsing, banking, or gaming, may be executed. For such various functions, a standardized general-purpose OS may be used.

In the image display device described in the disclosure, therefore, various applications may be freely added or deleted, for example, on a general-purpose OS kernel, whereby various user friendly functions may be executed. More specifically, the image display device may be a network TV, an Hbb TV, or a smart TV, and is applicable to a smartphone depending on circumstances.

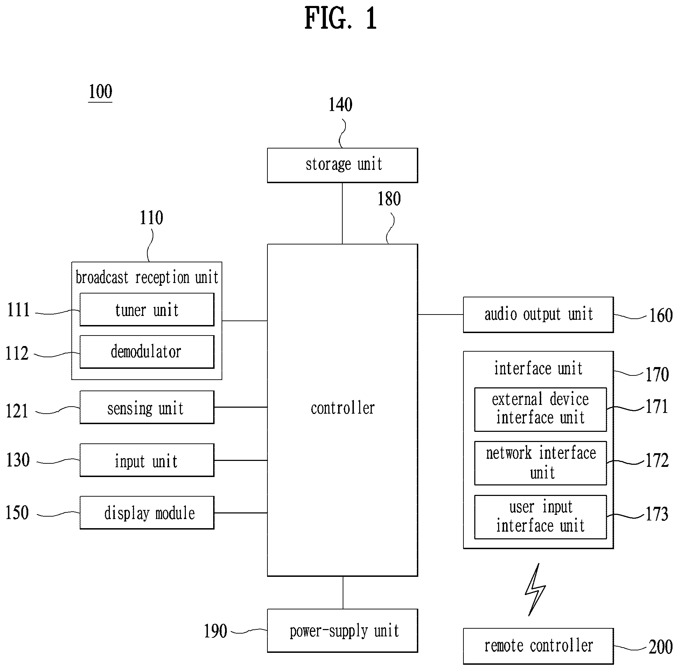

FIG. 1 is a block diagram illustrating components of a display device 100. The display device 100 may include a broadcast reception unit 110, an external device interface unit 171, a network interface unit 172, a storage unit 140, a user input interface unit 173, an input unit 130, a controller 180, a display module 150, an audio output unit 160, and/or a power supply unit 190.

The broadcast reception unit 110 may include a tuner unit 111 and a demodulation unit 112.

Unlike the figure, on the other hand, the display device 100 may include only the external device interface unit 171 and the network interface unit 172, among the broadcast reception unit 110, the external device interface unit 171, and the network interface unit 172. That is, the display device 100 may not include the broadcast reception unit 110.

The tuner unit 111 may select a broadcast signal corresponding to a channel selected by a user or any one of all pre-stored channels, among broadcast signals received through an antenna (not shown) or a cable (not shown). The tuner unit 111 may convert the selected broadcast signal into an intermediate frequency signal or a baseband video or audio signal.

For example, when the selected broadcast signal is a digital broadcast signal, the tuner unit 111 may convert the broadcast signal into a digital IF (DIF) signal, and when the selected broadcast signal is an analog broadcast signal, the tuner unit 111 may convert the broadcast signal into an analog baseband video or audio (CVBS/SIF) signal. That is, the tuner unit 111 may process the digital broadcast signal or the analog broadcast signal. The analog baseband video or audio (CVBS/SIF) signal output from the tuner unit 111 may be directly input to the controller 180.

Meanwhile, the tuner unit 111 may sequentially select broadcast signals of all broadcast channels stored through a channel memory function, among received broadcast signals, and may convert each of the selected broadcast signals into an intermediate frequency signal or a baseband video or audio signal.

Meanwhile, the tuner unit 111 may include a plurality of tuners in order to receive broadcast signals of a plurality of channels. Alternatively, a single tuner may simultaneously receive broadcast signals of a plurality of channels.

The demodulation unit 112 may receive the digital IF (DIF) signal converted by the tuner unit 111, and may perform demodulation. After performing demodulation and channel decryption, the demodulation unit 112 may output a stream signal (TS). At this time, the stream signal may be a multiplexed image, audio, or data signal.

The stream signal output from the demodulation unit 112 may be input to the controller 180. After performing demultiplexing and image/audio signal processing, the controller 180 may output an image through the display module 150, and may output audio through the audio output unit 160.

The sensing unit 120 is a device configured to sense change inside or outside the display device 100. For example, the sensing unit 120 may include at least one of a proximity sensor, an illumination sensor, a touch sensor, an infrared (IR) sensor, an ultrasonic sensor, an optical sensor (e.g. a camera), an audio sensor (e.g. a microphone), a battery gauge, and an environmental sensor (e.g. a hygrometer or a thermometer).

The controller 180 may check the state of the display device 100 based on information collected by the sensing unit, and when a problem occurs, may inform a user of the same or may solve the problem, whereby the controller may perform control such that the display device is maintained in the best state.

In addition, the controller may differently control the content, quality, and size of an image provided to the display module 150 based on a viewer or ambient light sensed by the sensing unit in order to provide the optimum viewing environment. With progress of a smart TV, a large number of functions have been loaded in the display device, and the sensing unit 20 has also been increased in number.

The input unit 130 may be provided at one side of a main body of the display device 100. For example, the input unit 130 may include a touchpad or a physical button. The input unit 130 may receive various user commands related to the operation of the display device 100, and may transmit control signals corresponding to the received commands to the controller 180.

With a decrease in size of a bezel of the display device 100, many display devices 100 have been configured such that the number of physical button type input units 130 exposed to the outside is minimized in recent years. Instead, a minimum number of physical buttons is located at the rear surface or the side surface of the display device, and the display device may receive user input through the touchpad or the user input interface unit 173, a description of which will follow, using a remote controller 200.

The storage unit 140 may store programs for signal processing and control in the controller 180, and may store a processed image, audio, or data signal. For example, the storage unit 140 may store application programs designed to execute various tasks that may be processed by the controller 180, and may selectively provide some of the stored application programs in response to request of the controller 180.

Programs stored in the storage unit 140 are not particularly restricted as long as the programs may be executed by the controller 180. The storage unit 140 may temporarily store an image, audio, or data signal received from an external device through the external device interface unit 171. The storage unit 140 may store information about a predetermined broadcast channel through a channel memory function, such as a channel map.

FIG. 1 shows an embodiment in which the storage unit 140 and the controller 180 are separately provided; however, the disclosure is not limited thereto. The storage unit 140 may be included in the controller 180.

The storage unit 140 may include at least one of a volatile memory (e.g. DRAM, SRAM, or SDRAM), a nonvolatile memory (e.g. flash memory), a hard disk drive (HDD), and a solid-state drive (SSD).

The display module 150 may convert an image signal, a data signal, an OSD signal, and a control signal processed by the controller 180 or an image signal, a data signal, and a control signal received from the interface unit 171 to generate a driving signal. The display module 150 may include a display panel 181 having a plurality of pixels.

Each of the plurality of pixels in the display panel may include RGB subpixels. Alternatively, each of the plurality of pixels in the display panel may include RGBW subpixels. The display module 150 may convert an image signal, a data signal, an OSD signal, and a control signal processed by the controller 180 to generate a driving signal for the plurality of pixels.

A plasma display panel (PDP), a liquid crystal display (LCD), an organic light-emitting diode (OLED), or a flexible display may be used as the display module 150, and a 3D display may also be used. The 3D display 130 may be classified as a non-glasses type display or a glasses type display.

The display device includes a display module, which occupies a major portion of the front surface thereof, and a case configured to cover the rear surface and the side surface of the display module, the case being configured to package the display module.

In recent years, the display device 100 has used a flexible display module 150, such as light-emitting diodes (LED) or organic light-emitting diodes (OLED), in order to implement a curved screen.

Light is supplied to an LCD, which was mainly used conventionally, through a backlight unit, since the LCD is not self-emissive. The backlight unit is a device that supplies light emitted from a light source to a liquid crystal uniformly located in front thereof. As the backlight unit has been gradually thinned, a thin LCD has been implemented. However, it is difficult to implement the backlight unit using a flexible material. If the backlight unit is curved, it is difficult to supply uniform light to the liquid crystal, whereby the brightness of a screen is changed.

In contrast, the LED or the OLED may be implemented so as to be curved, since an element constituting each pixel is self-emissive, and therefore no backlight unit is used. In addition, since each element is self-emissive, the brightness of the element is not affected even though the positional relationship between adjacent elements is changed, and therefore it is possible to implement a curved display module 150 using the LED or the OLED.

An organic light-emitting diode (OLED) panel appeared in earnest in mid 2010 and has rapidly replaced the LCD in the small- or medium-sized display market. The OLED is a display manufactured using a self-emissive phenomenon of an organic compound in which the organic compound emits light when current flows in the organic compound. The response time of the OLED is shorter than the response time of the LCD, and therefore afterimages hardly appear when video is implemented.

The OLED is an emissive display product that uses three fluorescent organic compounds having a self-emissive function, such as red, green, and blue fluorescent organic compounds and that uses a phenomenon in which electrons injected at a negative electrode and a positive electrode and particles having positive charges are combined in the organic compounds to emit light, and therefore a backlight unit, which deteriorates color, is not needed.

A light-emitting diode (LED) panel is based on technology of using one LED element as one pixel. Since it is possible to reduce the size of the LED element, compared to a conventional device, it is possible to implement a curved display module 150. The conventional device, which is called an LED TV, uses the LED as a light source of a backlight unit that supplies light to the LCD, and therefore the LED does not constitute a screen.

The display module includes a display panel and a coupling magnet, a first power supply unit, and a first signal module located at a rear surface of the display panel. The display panel may include a plurality of pixels R, G, and B. The plurality of pixels R, G, and B may be formed at intersections between a plurality of data lines and a plurality of gate lines. The plurality of pixels R, G, and B may be disposed or arranged in a matrix form.

For example, the plurality of pixels R, G, and B may include a red subpixel 'R', a green subpixel 'G', and a blue subpixel 'B'. The plurality of pixels R, G, and B may include a white subpixel 'W'.

The side of the display module 150 on which a picture is displayed may be referred to as a front side or a front surface. When the display module 150 displays the picture, the side of the display module 150 from which the picture cannot be viewed may be referred to as a rear side or a rear surface.

Meanwhile, the display module 150 may be constituted by a touchscreen, whereby an input device may also be used in addition to an output device.

The audio output unit 160 receives an audio signal processed by the controller 180 and outputs the same as audio.

The interface unit 170 serves as a path to various kinds of external devices connected to the display device 100. The interface unit may include a wireless system using an antenna as well as a wired system configured to transmit and receive data through a cable.

The interface unit 170 may include at least one of a wired/wireless headset port, an external charger port, a wired/wireless data port, a memory card port, a port for connection with a device having an identification module, an audio input/output (I/O) port, a video input/output (I/O) port, and an earphone port.

The broadcast reception unit 110 may be included as an example of the wireless system, and a mobile communication signal, a short-range communication signal, and a wireless Internet signal as well as a broadcast signal may be included.

The external device interface unit 171 may transmit or receive data to or from a connected external device. To this end, the external device interface unit 171 may include an A/V input and output unit (not shown).

The external device interface unit 171 may be connected to an external device, such as a digital versatile disc (DVD) player, a Blu-ray player, a game console, a camera, a camcorder, a computer (laptop computer), or a set-top box, in wired/wireless manner, and may perform input/output operation for the external device.

In addition, the external device interface unit 171 may establish a communication network with various remote controllers 200 in order to receive a control signal related to the operation of the display device 100 from each remote controller 200 or to transmit data related to the operation of the display device 100 to each remote controller 200.

The external device interface unit 171 may include a wireless communication unit (not shown) for short-range wireless communication with another electronic device. The external device interface unit 171 may exchange data with a mobile terminal adjacent thereto through the wireless communication unit (not shown). Particularly, in a mirroring mode, the external device interface unit 171 may receive device information, information of an application that is executed, and an image of the application from the mobile terminal.

The network interface unit 172 may provide an interface for connection of the display device 100 with a wired/wireless network including the Internet. For example, the network interface unit 172 may receive content or data provided by an Internet or content provider or a network operator through the network. Meanwhile, the network interface unit 172 may include a communication module (not shown) for connection with the wired/wireless network.

The external device interface unit 171 and/or the network interface unit 172 may include a communication module for short-range communication, such as Wi-Fi, Bluetooth, Bluetooth Low Energy (BLE), ZigBee, or Near Field Communication (NFC), or a communication module for cellular communication, such as Long-Term Evolution (LTE), LTE Advance (LTE-A), Code Division Multiple Access (CDMA), Wideband CDMA (WCDMA), Universal Mobile Telecommunications System (UMTS), or Wireless Broadband (WiBro).

The user input interface unit 173 may transmit a user input signal to the controller 180, or may transmit a signal from the controller 180 to a user. For example, the user input interface unit may transmit/receive a user input signal, such as power on/off, channel selection, or screen setting, to/from the remote controller 200, may transmit a user input signal, such as a power key, a channel key, a volume key, or a setting value, input from a local key (not shown) to the controller 180, may transmit a user input signal input from a sensor unit (not shown) configured to sense user gesture to the controller 180, or may transmit a signal from the controller 180 to the sensor unit.

The controller 180 may include at least one processor, and may control the overall operation of the display device 100 using the processor included therein. Here, the processor may be a general processor, such as a central processing unit (CPU). Of course, the processor may be a dedicated device, such as an ASIC, or another hardware-based processor.

The controller 180 may demultiplex a stream input through the tuner unit 111, the demodulation unit 112, the external device interface unit 171, or the network interface unit 172, or may process demultiplexed signals to generate and output a signal for image or audio output.

An image signal processed by the controller 180 may be input to the display module 150, which may display an image corresponding to the image signal. In addition, the image signal processed by the controller 180 may be input to an external output device through the external device interface unit 171.

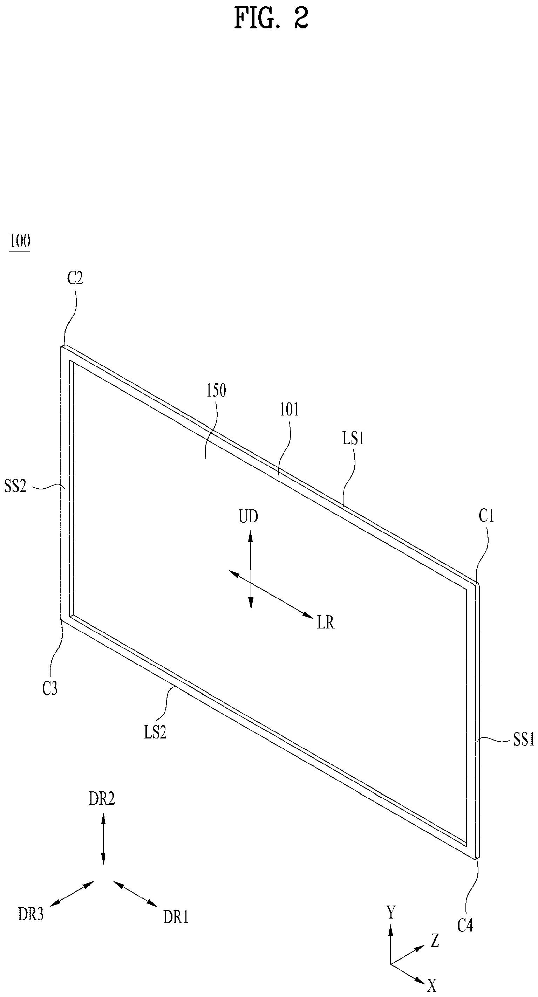

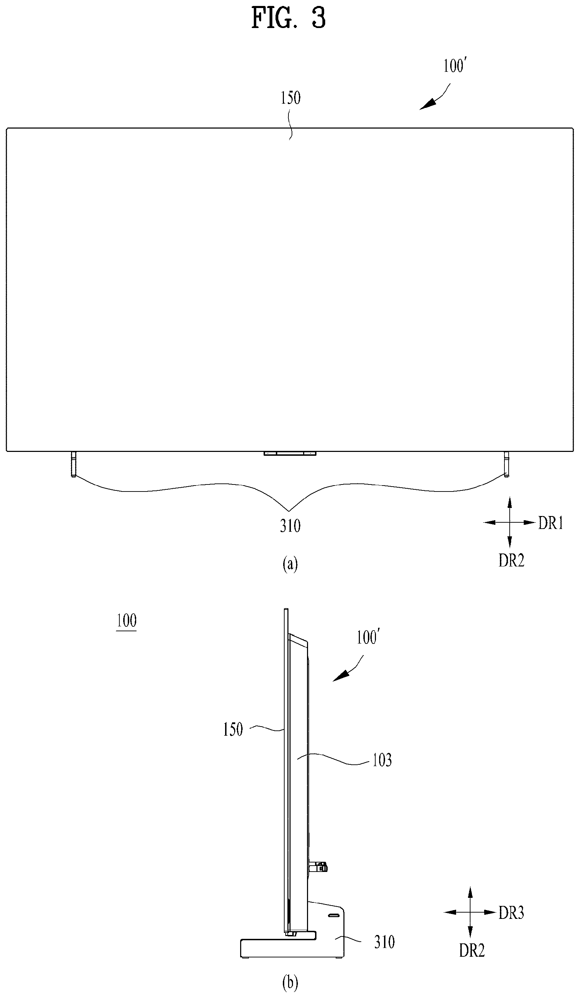

An audio signal processed by the controller 180 may be output through the audio output unit 160. In addition, the audio signal processed by the controller 180 may be input to an external output device through the external device interface unit 171. Although not shown in FIG. 2, the controller 180 may include a demultiplexing unit and an image processing unit, which will be described below with reference to FIG. 3.

Further, the controller 180 may control the overall operation of the display device 100. For example, the controller 180 may control the tuner unit 111 such that a broadcast corresponding to a channel selected by a user or a pre-stored channel is tuned.

In addition, the controller 180 may control the display device 100 according to a user command input through the user input interface unit 173 or an internal program. Meanwhile, the controller 180 may control the display module 150 to display an image. At this time, the image displayed on the display module 150 may be a still image or video, or may be a 2D image or a 3D image.

Meanwhile, the controller 180 may perform control such that a predetermined 2D object is displayed in an image displayed on the display module 150. For example, the object may be at least one of a connected web screen (newspaper or magazine), an electronic program guide (EPG), various menus, a widget, an icon, a still image, video, and text.

Meanwhile, the controller 180 may modulate and/or demodulate a signal using an amplitude shift keying (ASK) method. Here, the amplitude shift keying (ASK) method may be a method of changing the amplitude of a carrier depending on a data value to modulate a signal or restoring an analog signal to a digital data value depending on the amplitude of a carrier.

For example, the controller 180 may modulate an image signal using the amplitude shift keying (ASK) method, and may transmit the modulated image signal through a wireless communication module.

For example, the controller 180 may demodulate and process an image signal received through the wireless communication module using the amplitude shift keying (ASK) method.

As a result, the display device 100 may easily transmit and receive a signal to and from another image display device disposed adjacent thereto without using a unique identifier, such as a media access control (MAC) address, or a complicated communication protocol, such as TCP/IP.

Meanwhile, the display device 100 may further include a photographing unit (not shown). The photographing unit may photograph a user. The photographing unit may be implemented by one camera; however, the disclosure is not limited thereto. The photographing unit may be implemented by a plurality of cameras. Meanwhile, the photographing unit may be embedded in the display device 100 above the display module 150, or may be separately disposed. Image information photographed by the photographing unit may be input to the controller 180.

The controller 180 may recognize the location of a user based on an image captured by the photographing unit. For example, the controller 180 may recognize the distance between the user and the display device 100 (z-axis coordinate). Further, the controller 180 may recognize an x-axis coordinate and a y-axis coordinate in the display module 150 corresponding to the location of the user.

The controller 180 may sense user gesture based on the image captured by the photographing unit, a signal sensed by the sensor unit, or a combination thereof.

The power supply unit 190 may supply power to the components of the display device 100. In particular, the power supply unit may supply power to the controller 180, which may be implemented in the form of a system on chip (SOC), the display module 150 for image display, and the audio output unit 160 for audio output.

Specifically, the power supply unit 190 may include an AC/DC converter (not shown) configured to convert AC power into DC power and a DC/DC converter (not shown) configured to convert the level of the DC power.

Meanwhile, the power supply unit 190 serves to distribute power supplied from the outside to the respective components of the display device. The power supply unit 190 may be directly connected to an external power supply in order to supply AC power, or may include a battery so as to be used by charging.

In the former case, a cable is used, and the power supply unit is difficult to move or the movement range of the power supply unit is limited. In the latter case, the power supply unit is free to move, but the weight of the power supply unit is increased in proportion to the weight of the battery, the volume of the power supply unit is increased, and, for charging, the power supply unit must be directly connected to a power cable or must be coupled to a charging holder (not shown) that supplies power for a predetermined time.

The charging holder may be connected to the display device through a terminal exposed to the outside, or the battery mounted in the power supply unit may be charged in a wireless manner when the power supply unit approaches the charging holder.

The remote controller 200 may transmit user input to the user input interface unit 173. To this end, the remote controller 200 may use Bluetooth communication, radio frequency (RF) communication, infrared radiation communication, ultra-wideband (UWB) communication, or ZigBee communication. In addition, the remote controller 200 may receive an image, audio, or data signal output from the user input interface unit 173 so as to be displayed thereon or audibly output therefrom.

Meanwhile, the display device 100 may be a stationary or movable digital broadcast receiver capable of receiving a digital broadcast.

Meanwhile, the block diagram of the display device 100 shown in FIG. 1 is for an embodiment of the disclosure, and elements of the block diagram may be integrated, added, or omitted depending on specifications of an actually implemented display device 100.

That is, two or more elements may be integrated into one element, or one element may be divided into two or more elements, as needed. In addition, the function performed by each block is for describing the embodiment of the disclosure.

FIG. 2 is a front perspective view showing an example of the display device.

Referring to FIG. 2, the display device 100 may have a rectangular shape including a first long side LS1, a second long side LS2 opposite the first long side LS1, a first short side SS1 adjacent to the first long side LS1 and the second long side LS2, and a second short side SS2 opposite the first short side SS1.

Here, the area of the first short side SS1 may be referred to as a first side area, the area of the second short side SS2 may be referred to as a second side area opposite the first side area, the area of the first long side LS1 may be referred to as a third side area adjacent to the first side area and the second side area and located between the first side area and the second side area, and the area of the second long side LS2 may be referred to as a fourth side area adjacent to the first side area and the second side area, located between the first side area and the second side area, and opposite the third side area.

In addition, the lengths of the first and second long sides LS1 and LS2 are shown and described as being greater than the lengths of the first and second short sides SS1 and SS2, for convenience of description; however, the lengths of the first and second long sides LS1 and LS2 may be approximately equal to the lengths of the first and second short sides SS1 and SS2.

Also, in the following description, a first direction DR1 may be a direction parallel to the long sides LS1 and LS2 of the display device 100, and a second direction DR2 may be a direction parallel to the short sides SS1 and SS2 of the display device 100. A third direction DR3 may be a direction perpendicular to the first direction DR1 and/or the second direction DR2.

From a different point of view, the side of the display device 100 on which a picture is displayed may be referred to as a front side or a front surface. When the display device 100 displays the picture, the side of the display device 100 from which the picture cannot be viewed may be referred to as a rear side or a rear surface. When viewing the display device 100 from the front side or the front surface, the side of the first long side LS1 may be referred to as an upper side or an upper surface. In the same manner, the side of the second long side LS2 may be referred to as a lower side or a lower surface. In the same manner, the side of the first short side SS1 may be referred to as a right side or a right surface, and the side of the second short side SS2 may be referred to as a left side or a left surface.

In addition, the first long side LS1, the second long side LS2, the first short side SS1, and the second short side SS2 may be referred to edges 351 of the display device 100. In addition, points at which the first long side LS1, the second long side LS2, the first short side SS1, and the second short side SS2 are joined to each other may be referred to as corners. For example, a point at which the first long side LS1 and the first short side SS1 are joined to each other may be a first corner C1, a point at which the first long side LS1 and the second short side SS2 are joined to each other may be a second corner C2, a point at which the second short side SS2 and the second long side LS2 are joined to each other may be a third corner C3, and a point at which the second long side LS2 and the first short side SS1 are joined to each other may be a fourth corner C4.

Here, a direction from the first short side SS1 to the second short side SS2 or a direction from the second short side SS2 to the first short side SS1 may be referred to as a left-right direction LR. A direction from the first long side LS1 to the second long side LS2 or a direction from the second long side LS2 to the first long side LS1 may be referred to as an up-down direction UD.

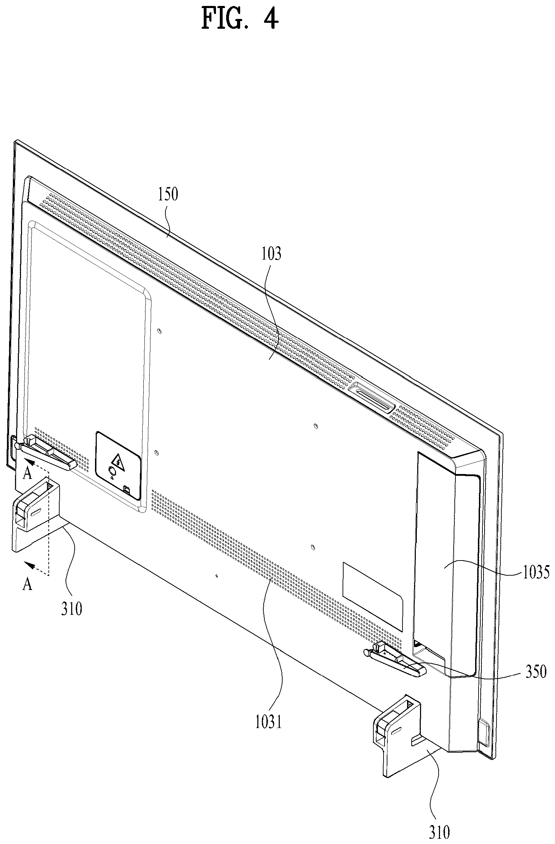

FIG. 3 is a front view and side view illustrating an example of the display device 100 according to the disclosure, and FIG. 4 is a rear perspective view illustrating the example of the display device 100 according to the disclosure.

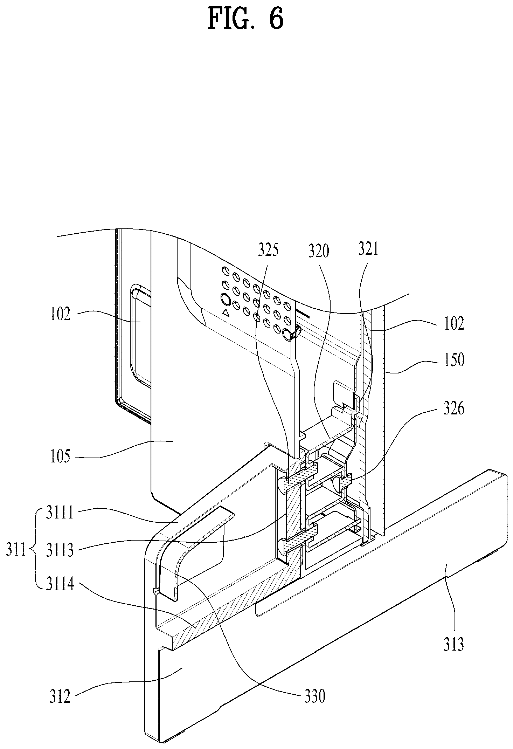

A display body 100' of the disclosure may include a cover bottom 102 (see FIG. 6) covering the display module 150 and the rear surface thereof, and a back cover 103 covering components such as a printed circuit board mounted on the rear surface of the cover bottom 102.

As the thickness of the display module 150 has recently decreased and components mounted on the rear surface thereof have become simpler, the display body 100' may become thinner. Since the display body 100' is thin, it may be hung tightly like a picture frame when mounted on a wall.

To place the display device 100 on the floor, a stand 310 is required. Although it is advantageous for the stand 310 to be thick and sturdy to support the display device 100, it affects the appearance of the display device 100, and thus the stand 310 with a simple design is preferred.

The stand 310 of the disclosure is characterized in that it minimizes an area visible from a front direction, thereby realizing a floating structure such as without the stand 310, as illustrated in FIG. 3(a).

However, to ensure the rigidity of the stand 310, the stand 310 may be configured to have a predetermined thickness when viewed from a lateral direction, as illustrated FIG. 3(b).

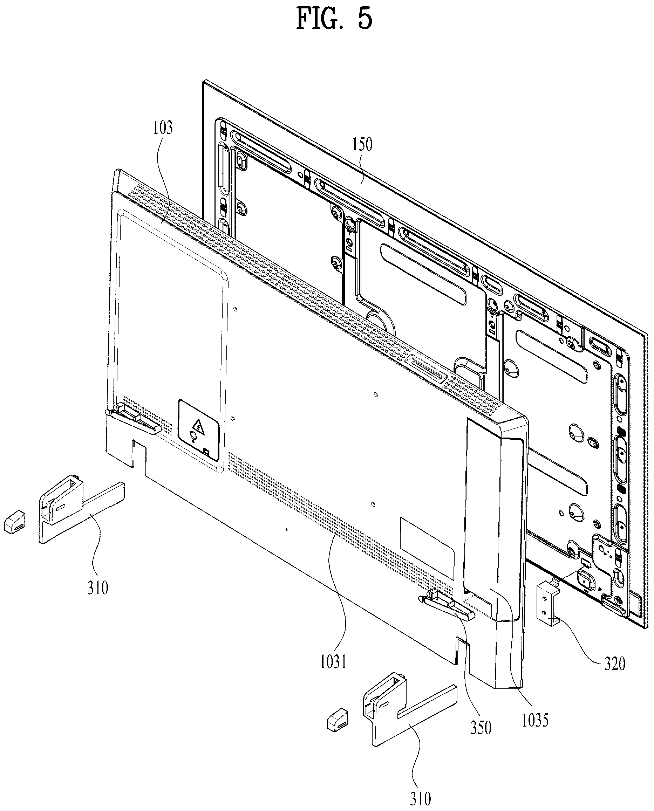

With reference to FIGS. 5 and 6, the stand 310 will be described below in more detail. FIG. 5 is an exploded perspective view illustrating an example of the display device 100 of the disclosure. FIG. 6 is a cross-sectional view taken along line A-A of FIG. 4.

A pair of stands 310 of the disclosure may be provided spaced apart from each other in a horizontal direction (the first direction DR1). Each of the stands 310 may include a fastening portion 311 fastened to the rear surface of the display body 100', a vertical portion 312 extending downward from the fastening portion 311, and a support portion 313 extending from the vertical portion 312 in the front direction.

The support portion 313 of the stand 310 may have a plate shape with a large thickness in the vertical direction (the second direction DR2) and a small width in the horizontal direction DR1. Despite a small size in the horizontal direction, the pair of stands 310 may be arranged in the horizontal direction and support a force of tilting in the horizontal direction, and the support portion 313 may extend long in a front-back direction (the third direction DR3) to prevent the display body 100' from falling forward and backward.

The support portion 313 extends from the vertical portion 312 along a floor surface in the front direction, and unlike a design extending diagonally in the front-back direction in a conventional display body 100', a contact area with the floor is large. Therefore, a stable support force may be obtained despite the design having a small width in the horizontal direction.

The vertical portion 312 may be located at rear ends of the fastening portion 311 and the support portion 313 and configured as a plate shape that forms the same plane as the support portion 313, and an L-shaped member may be used for the vertical portion 312 and the support portion 313.

The fastening portion 311 may include a pair of sidewalls arranged in the horizontal direction. A first sidewall 3111 and a second sidewall 3112 may be arranged in a direction perpendicular to the display module and parallel to the vertical portion 312.

The first sidewall 3111 may form a continuous surface with the vertical portion 312. The first sidewall 3111 forming a continuous surface with the vertical portion 312 may be positioned in a lateral direction of the display device 100, so that the stand 310 viewed from the lateral direction forms a single plane without a step, thereby providing a neat appearance, as illustrated in FIG. 3(b).

A third sidewall 3113 may be further included, which connects front ends of the first sidewall 3111 and the second sidewall 3112 to each other and faces the rear surface of the display body 100'. A first screw 325 fastened to the rear surface of the display body 100' may penetrate the third sidewall 3113 to fix the stand 310 to the display body 100'.

When the third sidewall 3113 is directly fastened to the cover bottom 102, a coupling portion is placed inward by the back cover 103 covering the rear surface of the cover bottom 102. The stand 310 is fastened and detached inconveniently by removing the back cover 103 or with the back cover 103 present. Moreover, when the stand 310 is detached, a large opening 1034 is formed in a portion corresponding to the fastening portion 311 of the stand 310.

To solve the above problem, a stand support 320 fastened to the cover bottom 102 may be further provided.

The stand support 320 is fastened to the cover bottom 102, and fastening surfaces of the stand support 320 and the stand 310 are positioned at a similar height to the rear cover 103, which advantageously facilitates fastening and detachment of the stand 310.

The stand support 320 may be fastened to the cover bottom 102 using a second screw 326, and in view of the structure of the cover bottom 102 in close contact with the display module, it is difficult to provide a plurality of second screws 326 or use a long second screw 326.

A hook 321 may be further included to secure a fastening force between the cover bottom 102 and the stand support 320. After the stand support 320 is coupled to the rear surface of the cover bottom 102 so that the hook 321 is inserted into the cover bottom 102, the stand support 320 may be fastened to the cover bottom using the second screw 326.

After the stand support 320 and the third sidewall 3113 of the stand 310 are arranged to be in contact, the first screw 325 may be inserted through the third sidewall 3113. The first sidewall 3111 and the second sidewall 3112 may cover the first screw 325 inserted into the third sidewall 3113 so that it is not visible from the outside.

A space surrounded by the first sidewall 3111, the second sidewall 3112, and the third sidewall 3113 may be included, and an accommodation space 3117 may be provided, in which a power cable or an HDMI cable is accommodated. A cable 188 located in the accommodation space 3117 of the fastening portion 311 may be disposed to extend downward along the vertical portion 312 of the stand 310 and located on the rear surface of the stand 310.

A holder block 330 may be further included, which is located between the first sidewall 3111 and the second sidewall 3112 to prevent the cable 188 from being dislodged from the fastening portion 311. As the accommodation space 3117 of the fastening portion 311 is open in the rear direction, the holder block 330 may be inserted in the open rear direction to prevent the cable 188 from being dislodged from the accommodation space 3117.

Fixing grooves are formed in the first sidewall 3111 and the second sidewall 3112 to fix the holder block 330, and fixing protrusions may be formed on both sides of the holder block 330 to be inserted into the fixing grooves.

To accurately insert the fixing protrusions into the fixing grooves, guide grooves 3115 extend from rear ends of the first sidewall 3111 and the second sidewall 3112 in the front direction, and guide protrusions 335 protruding on both sides of the holder block 330 are inserted into the guide groove 3115, so that the holder block 330 may be fixed to the fastening portion 311 by moving along the guide grooves 3115.

The holder block 330 includes an internal space open in the front direction, and when force is applied, the shape of the holder block 330 may be deformed within a predetermined range, thereby facilitating insertion and separation of the fixing protrusions into and from the fixing grooves.

A bottom portion 3114 may be further provided, which connects the bottoms of the first sidewall 3111 and the second sidewall 3112 and forms the bottom of the accommodation space 3117 for the cable 188, and the holder block 330 may be spaced apart from the bottom portion 3114 by a predetermined distance so that the cable 188 may pass through.

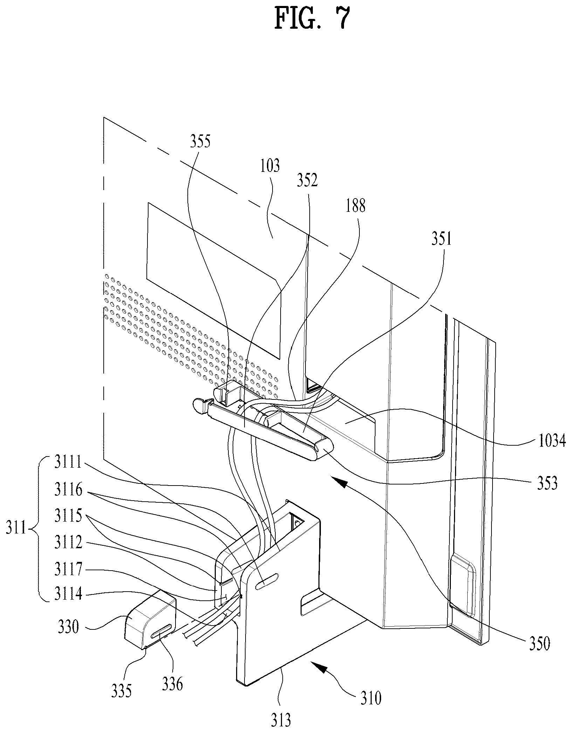

FIG. 7 is a diagram illustrating a method of organizing the cable 188 in the display device 100 according to the disclosure.

The back cover 103 may include an opening 1034 to expose the cable 188 connected to the printed circuit board mounted on the rear surface of the cover bottom 102. Although the cable 188 may be connected to the printed circuit board, it may be connected through a connector that connects the cable 188 to the opening 1034 of the cover bottom 102.

As the types of cables 188 connecting the display device 100 become more diverse, the types of connectors become more diverse and the size of the opening 1034 becomes larger, which may hinder the design of the rear surface of the display device 100 and allow introduction of dust or a foreign material. Accordingly, a cable cover 1035 covering the opening 1034 may be provided to prevent the connector from being exposed, as illustrated in FIG. 4.

One side of the cable cover 1035 may be spaced apart from the opening 1034 so that the cable 188 may pass through. The cable 188 extended from the opening 1034 may be accommodated in the accommodation space 3117 located in the fastening portion 311 of the stand 310.

A cable clip 350 may be further included between the opening 1034 and the stand 310 to assist in organizing the cable 188.

The cable clip 350 may include a pair of pins 351 and 352 with ends 353 connected to each other so that the pins 351 and 352 are pivotable, a first pin 351 located at the front may be fixed to the back cover 103, and a second pin 352 located at the rear may be coupled to the other end of the first pin 351, so that the cable 188 may be accommodated between the first pin 351 and the second pin 352. A pair of cable clips 350 may be located above the pair of stands 310, respectively, as illustrated in FIG. 4.

The display device 100 of the disclosure may implement a floating design on its front by using the stands 310 with a simple design.

Further, since the structure of the stands 310 are simple, a manufacturing process is simple and assembly is also easy.

Further, as the cable 188 extends along the stand 310, the messy appearance of the cable 188 may be hidden from the front. The above detailed description should not be construed as being limitative in all terms, but should be considered as being illustrative. The scope of the disclosure should be determined by reasonable analysis of the accompanying claims.

## Claims

1. A display device (100) comprising:
a display body (100') including a display module (150) outputting an image;
a cable (188) connected to the display body (100'); and
a pair of stands (310) supporting the display body (100') and arranged spaced apart from each other in a horizontal direction,
wherein each of the stands (310) includes:
a fastening portion (311) fastened to a rear surface of the display body (100');
a vertical portion (312) extending downward from the fastening portion (311); and
a support portion (313) extending from the vertical portion (312) in a front direction perpendicular to a surface direction of the display body (100'),
wherein the fastening portion (311) includes:
a first sidewall (3111);
a second sidewall (3112) disposed spaced apart from the first sidewall (3111);
a third sidewall (3113) connecting front ends of the first sidewall (3111) and the second sidewall (3112) to each other; and
a first screw (325) penetrating the third sidewall (3113) and fastened to the display body (100');
an accommodation space (3117) surrounded by the first side wall (3111), the second side wall (3112) and the third side wall (3113) to accommodate the cable (188); and **characterized in** comprising
a holder block (330) inserted between the first sidewall (3111) and the second sidewall (3112); and
a guide groove (3115) and a fixing groove (3116) formed on the first side wall (3111) and the second side wall (3112),
wherein the holder block (330) includes:
a guide protrusion (335) inserted into the guide groove (3115); and
a fixing protrusion (336) inserted into the fixing groove (3116) to fix the holder block (330).

2. The display device (100) according to claim 1, wherein the vertical portion (312) extends downward from a rear-direction end of the fastening portion (311), and
wherein the support portion (313) protrudes forward from a front surface of the display body (100').

3. The display device (100) according to claim 1, wherein the support portion (313) includes a plate-shaped member having a surface perpendicular to the horizontal direction and having a small thickness in the horizontal direction.

4. The display device (100) according to claim 1, wherein the vertical portion (312) and the support portion (313) have the same thickness in the horizontal direction.

5. The display device (100) according to claim 1, wherein the first sidewall (3111) forms a continuous surface with the vertical portion (312).

6. The display device (100) according to claim 1, further comprising a bottom portion (3114) connecting bottoms of the first sidewall (3111) and the second sidewall (3112) to each other,
wherein the bottom portion (3114) is spaced apart from the holder block (330) by a predetermined distance.

7. The display device (100) according to claim 1, further comprising a pair of stand supports (320) fastened to the rear surface of the display body (100'),
wherein each of the stands (310) is fastened to the stand supports (310).

8. The display device (100) according to claim 7, wherein each stand support (320) includes a hook (321) fastened to a cover bottom (102) located on the rear surface of the display body (100'), and a second screw (326) penetrating the stand support (320) and fixed to the cover bottom (102).

9. The display device (100) according to claim 1, wherein the display body (100') includes:
a cover bottom (102) coupled to a rear surface of the display module (150);
a printed circuit board mounted on the cover bottom (102);
the cable (188) connected to the printed circuit board;
a back cover (103) including an opening through which the cable (188) passes and covering the printed circuit board; and
a cable clip (350) coupled to the back cover (103) and fixing the cable (188).

10. The display device (100) according to claim 9, wherein the cable clip (350) is located between the opening of the back cover (103) and one of the stands (310).

## Patentansprüche

1. Anzeigevorrichtung (100), umfassend:
einen Anzeigekörper (100') mit einem Anzeigemodul (150), das ein Bild ausgibt;
ein Kabel (188), das mit dem Anzeigekörper (100') verbunden ist; und
ein Paar Ständer (310), die den Anzeigekörper (100') tragen und in horizontaler Richtung voneinander beabstandet angeordnet sind,
wobei jeder der Ständer (310) umfasst:
einen Befestigungsabschnitt (311), der an einer Rückseite des Anzeigekörpers (100') befestigt ist;
einen vertikalen Abschnitt (312), der sich von dem Befestigungsabschnitt (311) nach unten erstreckt; und
einen Stützabschnitt (313), der sich von dem vertikalen Abschnitt (312) in einer vorderen Richtung senkrecht zur Oberflächenrichtung des Anzeigekörpers (100') erstreckt,
wobei der Befestigungsabschnitt (311) umfasst:
eine erste Seitenwand (3111);
eine zweite Seitenwand (3112), die in einem Abstand von der ersten Seitenwand (3111) angeordnet ist;
eine dritte Seitenwand (3113), die die vorderen Enden der ersten Seitenwand (3111) und der zweiten Seitenwand (3112) miteinander verbindet; und
eine erste Schraube (325), die die dritte Seitenwand (3113) durchdringt und am Anzeigekörper (100') befestigt ist;
einen Aufnahmeraum (3117), der von der ersten Seitenwand (3111), der zweiten Seitenwand (3112) und der dritten Seitenwand (3113) umgeben ist, um das Kabel (188) aufzunehmen; und
**dadurch gekennzeichnet, dass** die Anzeigevorrichtung umfasst
einen Halteblock (330), der zwischen der ersten Seitenwand (3111) und der zweiten Seitenwand (3112) eingesetzt ist; und
eine Führungsnut (3115) und eine Befestigungsnut (3116), die an der ersten Seitenwand (3111) und der zweiten Seitenwand (3112) ausgebildet sind,
wobei der Halteblock (330) umfasst:
einen Führungsvorsprung (335), der in die Führungsnut (3115) eingesetzt ist; und
einen Befestigungsvorsprung (336), der in die Befestigungsnut (3116) eingesetzt ist, um den Halteblock (330) zu befestigen.

2. Anzeigevorrichtung (100) nach Anspruch 1, wobei sich der vertikale Abschnitt (312) von einem hinteren Ende des Befestigungsabschnitts (311) nach unten erstreckt, und
wobei der Stützabschnitt (313) von einer Vorderseite des Anzeigekörpers (100') nach vorne vorsteht.

3. Anzeigevorrichtung (100) nach Anspruch 1, wobei der Stützabschnitt (313) ein plattenförmiges Element umfasst, das eine zur horizontalen Richtung senkrechte Oberfläche aufweist und in horizontaler Richtung eine geringe Dicke aufweist.

4. Anzeigevorrichtung (100) nach Anspruch 1, wobei der vertikale Abschnitt (312) und der Stützabschnitt (313) in horizontaler Richtung die gleiche Dicke aufweisen.

5. Anzeigevorrichtung (100) nach Anspruch 1, wobei die erste Seitenwand (3111) eine durchgehende Oberfläche mit dem vertikalen Abschnitt (312) bildet.

6. Anzeigevorrichtung (100) nach Anspruch 1, die ferner einen Bodenabschnitt (3114) umfasst, der die Böden der ersten Seitenwand (3111) und der zweiten Seitenwand (3112) miteinander verbindet,
wobei der Bodenabschnitt (3114) in einem vorbestimmten Abstand vom Halteblock (330) beabstandet ist.

7. Anzeigevorrichtung (100) nach Anspruch 1, die ferner ein Paar Ständerhalterungen (320) umfasst, die an der Rückseite des Anzeigekörpers (100') befestigt sind,
wobei jeder der Ständer (310) an den Ständerhalterungen (310) befestigt ist.

8. Anzeigevorrichtung (100) nach Anspruch 7, wobei jede Ständerhalterung (320) einen Haken (321), der an einer an der Rückseite des Anzeigekörpers (100') angeordneten Abdeckungsunterseite (102) befestigt ist, und eine zweite Schraube (326), die die Ständerhalterung (320) durchdringt und an der Abdeckungsunterseite (102) befestigt ist, umfasst.

9. Anzeigevorrichtung (100) nach Anspruch 1, wobei der Anzeigekörper (100') umfasst:
einen Abdeckboden (102), der mit einer Rückseite des Anzeigemoduls (150) verbunden ist;
eine auf dem Abdeckboden (102) montierte Leiterplatte;
das Kabel (188), das mit der Leiterplatte verbunden ist;
eine hintere Abdeckung (103), die eine Öffnung aufweist, durch die das Kabel (188) verläuft, und die die Leiterplatte abdeckt; und
eine Kabelklemme (350), die mit der hinteren Abdeckung (103) verbunden ist und das Kabel (188) fixiert.

10. Anzeigevorrichtung (100) nach Anspruch 9, wobei sich die Kabelklemme (350) zwischen der Öffnung der hinteren Abdeckung (103) und einem der Ständer (310) befindet.

## Revendications

1. Dispositif d'affichage (100), comprenant:
le corps d'afficheur (100') comprenant un module d'affichage (150) délivrant une image.
un câble (188) connectée au corps d'afficheur (100'); et
une paire de supports (310) supportant le corps d'afficheur (100') et disposés à distance les uns des autres dans le sens horizontal,
dans lequel chacun des premiers supports (310) comprend:
une portion de fixation (311) fixé à la face arrière du corps d'afficheur (100');
une portion verticale (312) s'étendant vers le bas à partir de la portion de fixation (311); et
une portion de support (313) s'étendant depuis la portion verticale (312) vers l'avant, perpendiculairement à la direction de la surface du corps d'afficheur (100'),
dans lequel la portion de fixation (311) comprend:
une première paroi latérale (3111);
une deuxième paroi latérale (3112) disposée à distance de la première paroi latérale (3111);
une troisième paroi latérale (3113) reliant entre elles les extrémités avant de la première paroi latérale (3111) et de la deuxième paroi latérale (3112); et
une première vis (325) traversant la troisième paroi latérale (3113) et fixée au corps d'afficheur (100');
un espace de logement (3117) entouré par la première paroi latérale (3111), la deuxième paroi latérale (3112) et la troisième paroi latérale (3113) permettant de loger le câble (188); et **caractérisé en ce qu'**il comprend
un bloc de support (330) inséré entre la première paroi latérale (3111) et la deuxième paroi latérale (3112); et
une rainure de guidage (3115) et une rainure de fixation (3116) formées sur la première paroi latérale (3111) et la deuxième paroi latérale (3112),
dans lequel le bloc de support (330) comprend:
la saillie de guidage (335) insérée dans la rainure de guidage (3115); et
une saillie de fixation (336) insérée dans la rainure de fixation (3116) afin de fixer le bloc de support (330).

2. Dispositif d'affichage (100) selon la revendication 1, dans lequel la partie verticale (312) s'étend vers le bas à partir d'une extrémité vers l'arrière de la portion de fixation (311), et
dans lequel la portion de support (313) fait saillie vers l'avant à partir d'une surface avant du corps d'afficheur (100').

3. Dispositif d'affichage (100) selon la revendication 1, dans lequel la portion de support (313) comprend un élément en forme de plaque présentant une surface perpendiculaire au sens horizontal et une faible épaisseur dans le sens horizontal.

4. Dispositif d'affichage (100) selon la revendication 1, dans lequel la portion verticale (312) et la portion de support (313) ont la même épaisseur dans le sens horizontal.

5. Dispositif d'affichage (100) selon la revendication 1, dans lequel la première paroi latérale (3111) forme une surface continue avec la portion verticale (312).

6. Dispositif d'affichage (100) selon la revendication 1, comprenant en outre une portion inférieure (3114) reliant entre elles les fonds de la première paroi latérale (3111) et de la deuxième paroi latérale (3112),
dans lequel la portion inférieure (3114) est espacée du bloc de support (330) d'une distance prédéterminée.

7. Dispositif d'affichage (100) selon la revendication 1, comprenant en outre une paire de pattes de support (320) fixées à la face arrière du corps d'afficheur (100'),
dans lequel chacun des supports (310) est fixé aux pattes de support (310).

8. Dispositif d'affichage (100) selon la revendication 7, dans lequel chaque patte support (320) comprend un crochet (321) fixé à un fond de couvercle (102) situé sur la face arrière du corps d'afficheur (100'), et une deuxième vis (326) traversant la patte de support (320) et fixée au fond de couvercle (102).

9. Dispositif d'affichage (100) selon la revendication 1, dans lequel le corps d'afficheur (100) comprend:
un fond de couvercle (102) couplé à la face arrière du module d'affichage (150);
une carte de circuit imprimé montée sur le fond de couvercle (102);
le câble (188) connecté à la carte de circuit imprimé;
un couvercle arrière (103) comportant une ouverture à travers laquelle passe le câble (188) et recouvrant la carte de circuit imprimé; et
un serre-câble (350) couplé au couvercle arrière (103) et fixant le câble (188).

10. Dispositif d'affichage (100) selon la revendication 9, dans lequel le serre-câble (350) est situé entre l'ouverture du couvercle arrière (103) et l'un des supports (310).
